# EUROPÄISCHE PATENTANMELDUNG

(11) **EP 1 529 733 A1**
(43) Veröffentlichungstag der Anmeldung: **11.05.2005**
(21) Anmeldenummer: 04024305.7
(22) Anmeldetag: 12.10.2004
(51) Int. Cl.: B65D 19/42

(54) **Rollplatte**

(30) Priorität: 06.11.2003 DE 20317066 U
(71) Anmelder: GEBHARDT Transport- und Lagersysteme GmbH, 93413 Cham (DE)
(72) Erfinder: Artinger, Manfred, 94530 Auerbach (DE); Hauser, Erwin, 93413 Cham (DE)
(74) Vertreter: Schieschke, Klaus, Dipl.-Ing.

(57) **Zusammenfassung**

Die Erfindung betrifft eine Rollplatte (1) aus Kunststoff, zum Transport von Waren, mit vier diagonal einander gegenüberliegend an der Rollplatte (1) befestigten Rollen (2, 2'), wobei die Rollplatte (1) in den Befestigungsbereichen für die Rollen (2, 2') als Dreiecksabstützung Diagonalstreben (5, 5') aufweist

## Beschreibung

Die Erfindung bezieht sich auf eine Rollplatte aus Kunststoff, zum Transport von Waren, mit vier diagonal einander gegenüberliegend an der Rollplatte befestigten Rollen.

Derartige Rollplatten dienen beispielsweise zum Transport von Getränkekästen, von landwirtschaftlichen Produkten, von Süßwaren, Lebensmitteln, Produkten der Milchindustrie, chemischen Produkten, wie Reinigungsmittel und Waschpulver, kosmetischen Produkten oder tierischen Futterprodukten.

Diese Rollplatten sind infolge der vorgenannten vielseitigen Anwendungsgebiete hohen Belastungen ausgesetzt und müssen entsprechend konstruktiv gestaltet sein.

Zum allgemein bekannten Stand der Technik zählen bereits Rollplatten, welche aus Metall, aus Kunststoff oder aus beiden vorgenannten Materialien bestehen. Diese bekannten Rollplatten erfüllten bisher entweder nicht oder nur ungenügend die Anforderungen bezüglich einer hohen Lastaufnahme, eines gestapelten Transports in Form einer Blockstapelung und einer glatten Oberfläche, um die darauf gelagerten Waren möglichst beschädigungsfrei zu transportieren.

Entsprechend bestand die Aufgabe der vorliegenden Erfindung darin, eine einfach gestaltete Rollplatte der eingangs genannten Art zu schaffen, welche in der Lage ist, die vorgenannten Forderungen zu erfüllen.

Diese Aufgabe wird erfindungsgemäß dadurch gelöst, dass die Rollplatte in den Befestigungsbereichen für die Rollen als Dreiecksabstützung Diagonalstreben aufweist. Durch diese Diagonalstreben wird auf einfache Weise sichergestellt, dass die erfindungsgemäße Rollplatte hohe Lasten aufnehmen kann, ohne ihre Effektivität zu verlieren.

Bei einer Rollplatte, welche in Draufsicht rechteckig ausgebildet ist und wabenartig verlaufende Stege aufweist, besteht erfindungsgemäß die Möglichkeit, dass die stegartig ausgebildeten Diagonalstreben in den Eckbereichen der Rollplatte die auslaufenden Stege jeweils miteinander verbinden, wobei vorteilhafterweise mindestens zwei äquidistant verlaufende Diagonalstreben in den Eckbereichen der Rollplatte angeordnet sein können. Hierdurch ergibt sich eine erhebliche Verbesserung in der Lastaufnahme, wobei trotzdem die gesamte Anordnung einfach ausgebildet ist. Die erfindungsgemäße Rollplatte ist extrem stabil durch die Dreiecksabstützung, wobei außerdem die Möglichkeit einer Blockstapelung besteht.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine Unteransicht der erfindungsgemäßen Rollplatte
- Fig. 2: eine Draufsicht auf die erfindungsgemäße Rollplatte nach Fig. 1
- Fig. 3: eine Seitenansicht von zwei übereinander angeordneten Rollplatten
- Fig. 4: eine Vorderansicht der gestapelten Rollplatten nach Fig. 3.

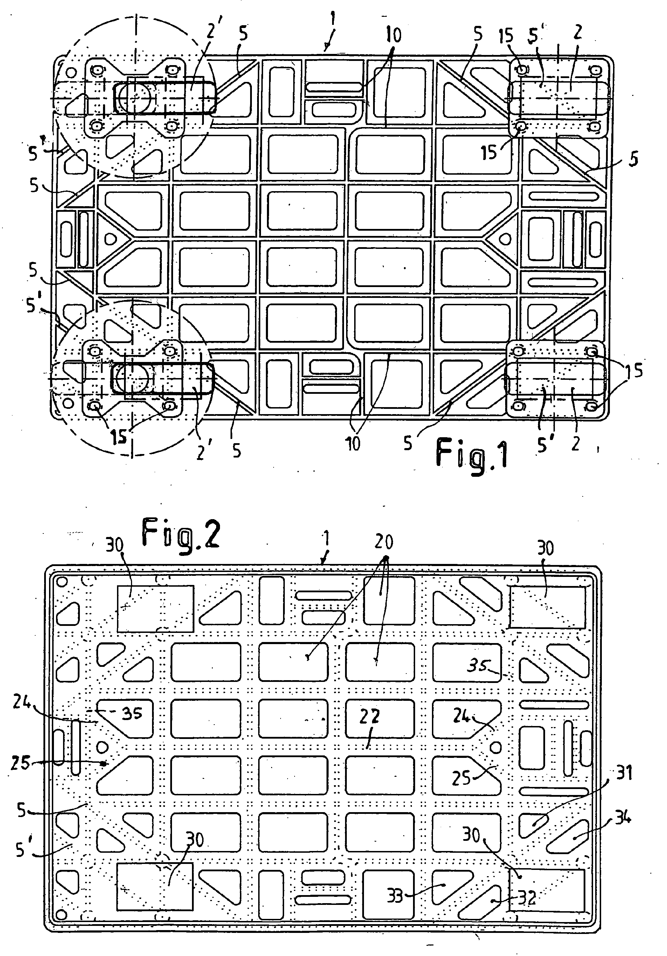

Gemäß Fig. 1 und 2 besteht die Rollplatte 1 aus Kunststoff und dient zum Transport von Waren. Hierbei weist die Rollplatte 1 zwei im Abstand voneinander angeordnete Bockrollen 2 und zwei ebenfalls im Abstand voneinander angeordnete Lenkrollen 2' auf, welche über Lagerplatten und Lagerstellen 15 an der Rollplatte 1 befestigt sind.

Erfindungsgemäß weist die Rollplatte 1 in den Befestigungsbereichen der Lagerplatten für die Rollen 2 und 2' als Dreiecksabstützung äquidistant verlaufende Diagonalstreben 5 und 5' auf.

Aus Fig. 1 und 2 geht hervor, dass die Rollplatte 1 vorzugsweise in Draufsicht rechteckig ausgebildet ist und wabenartig verlaufende Stege 10 aufweist. Die stegartig ausgebildeten Diagonalstreben 5 und 5' sind vorzugsweise in den Eckbereichen der Rollplatte 1 so angeordnet, dass sie die auslaufenden Stege 10 jeweils miteinander verbinden.

Die Lagerstellen 15 - d.h. die Lagerplatten - für die Befestigung der jeweiligen Rollen 2 und 2' sind vorzugsweise jeweils im Bereich der beiden, äquidistant verlaufenden Diagonalstreben 5 und 5' angeordnet.

Aus Fig. 1 ist ersichtlich, dass die Lagerstellen 15 rechteckig angeordnet sind. Hierbei liegen zwei diagonal gegenüberliegende Lagerstellen 15 auf der inneren Diagonalstrebe 5', eine Lagerstelle auf der äußeren Diagonalstrebe 5 und eine Lagerstelle im Eckbereich der Rollplatte 1. Dadurch ergibt sich eine weitere Verbesserung der Lastaufnahme der erfindungsgemäßen Rollplatte.

Aus Fig. 2 ist ersichtlich, dass zwischen den wabenartig angeordneten Stegen 10 Aussparungen 20 liegen. Außerdem kann ein Mittelsteg 22 Anwendung finden, welcher an beiden Enden in zwei auseinander laufende Endstege 24 und 25 übergeht. Die Endstege 24 und 25 ihrerseits gehen jeweils in einen Quersteg 35 über, welcher jeweils endseitig die beiden äquidistant verlaufenden Diagonalstege 5 und 5' miteinander verbindet.

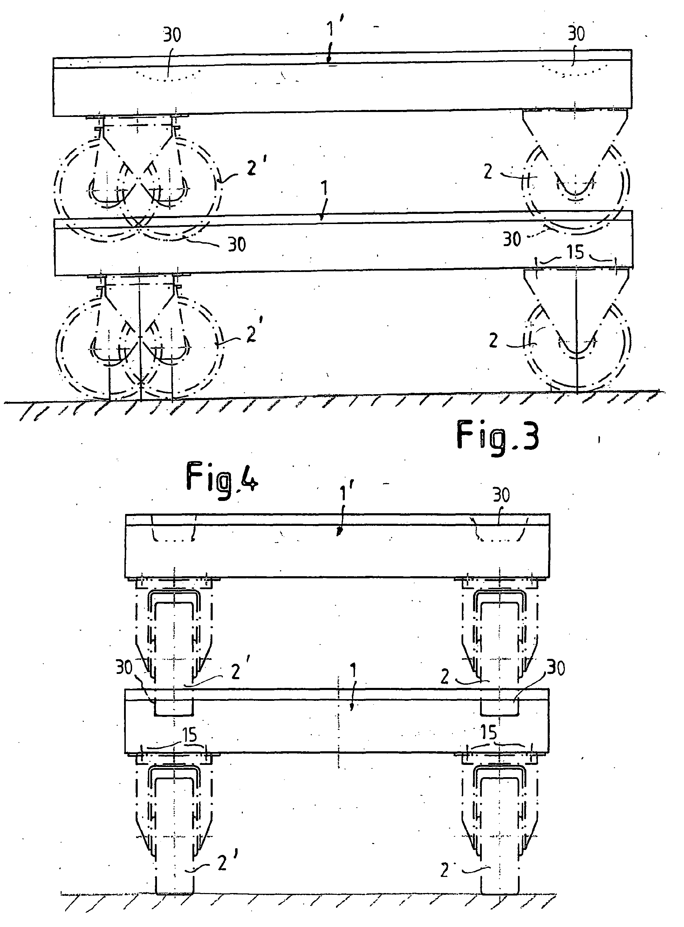

Gemäß Fig. 2 kann die Rollplatte 1 oberseitig in den Eckbereichen mit gewölbten Ausnehmungen 30 zur Aufnahme von Rollen 2 und 2' einer aufgelagerten weiteren Rollplatte 1' nach Fig. 3 und 4 versehen sein. Hierbei lagern sich die beiden Bockrollen 2 und die beiden Lenkrollen 2' in den jeweiligen gewölbten Ausnehmungen 30 der darunter liegenden Rollplatte 1 ein, so dass sich auf einfache Weise eine effektive Blockstapelung ergibt.

Nach Fig. 2 besteht auch die Möglichkeit, dass im Bereich der Diagonalstreben weitere Ausnehmungen 31, 32, 33 und 34 in der Rollplatte 1 vorgesehen sind, so dass hierdurch eine weitere Materialersparnis gegeben ist.

Die erfindungsgemäße Rollplatte 1 bzw. 1' ist trotz einfacher konstruktiver Gestaltung in der Lage, hohe Lasten aufzunehmen und auch über einen längeren Zeitraum effektiv dazu beizutragen, die eingangs genannten Waren zu transportieren.

## Patentansprüche

1. Rollplatte (1) aus Kunststoff, zum Transport von Waren, mit vier diagonal einander gegenüberliegend an der Rollplatte (1) befestigten Rollen (2, 2'),
**dadurch gekennzeichnet,**
**dass** die Rollplatte (1) in den Befestigungsbereichen für die Rollen (2, 2') als Dreiecksabstützung Diagonalstreben (5, 5') aufweist.

2. Rollplatte nach Anspruch 1, welche in Draufsicht rechteckig ausgebildet ist und wabenartig verlaufende Stege (10) aufweist, **dadurch gekennzeichnet, dass** die stegartig ausgebildeten Diagonalstreben (5, 5') in den Eckbereichen der Rollplatte (1) die auslaufenden Stege (10) jeweils miteinander verbinden.

3. Rollplatte nach Anspruch 1 und 2, **dadurch gekennzeichnet, dass** mindestens zwei äquidistant verlaufende Diagonalstreben (5, 5') in den Eckbereichen der Rollplatte (1) angeordnet sind.

4. Rollplatte nach einem oder mehreren der vorhergehenden Ansprüche, mit zwei im Abstand voneinander angeordneten Bockrollen (2) und zwei im Abstand voneinander angeordneten Lenkrollen (2'), welche über Lagerstellen (15) an der Rollplatte (1) befestigt sind, **dadurch gekennzeichnet, dass** die Lagerstellen (15) für die Befestigung der jeweiligen Rollen (2, 2') jeweils im Bereich der beiden, äquidistant verlaufenden Diagonalstreben (5, 5') angeordnet sind.

5. Rollplatte nach Anspruch 4, mit einer rechteckigen Anordnung der Lagerstellen, **dadurch gekennzeichnet, dass** zwei diagonal gegenüber liegende Lagerstellen (15) auf der inneren Diagonalstrebe (5'), eine Lagerstelle auf der äußeren Diagonalstrebe (5) und eine Lagerstelle im Eckbereich der Rollplatte (1) angeordnet sind.

6. Rollplatte nach einem oder mehreren der vorhergehenden Ansprüche, **dadurch gekennzeichnet, dass** zwischen den wabenartig angeordneten Stegen (10) Aussparungen (20) liegen.

7. Rollplatte nach einem oder mehreren der vorhergehenden Ansprüche, **dadurch gekennzeichnet, dass** ein Mittelsteg (22) an beiden Enden in zwei auseinanderlaufende Endstege (24, 25) übergeht.

8. Rollplatte nach Anspruch 7, **dadurch gekennzeichnet, dass** die Endstege (24, 25) jeweils in einen Quersteg (35) übergehen, welcher jeweils endseitig die beiden äquidistant verlaufenden Diagonalstege (5, 5') miteinander verbindet.

9. Rollplatte nach einem oder mehreren der vorhergehenden Ansprüche, **dadurch gekennzeichnet, dass** die Rollplatte (1) oberseitig in den Eckbereichen mit gewölbten Ausnehmungen (30) zur Aufnahme von Rollen (2, 2') einer aufgelagerten weiteren Rollplatte (1') versehen ist.

10. Rollplatte nach einem oder mehreren der vorhergehenden Ansprüche, **dadurch gekennzeichnet, dass** im Bereich der Diagonalstreben (5, 5') weitere Ausnehmungen (31, 32, 33, 34) in der Rollplatte (1) vorgesehen sind.
